## Europäisches Patentamt

## European Patent Office

## Office européen des brevets

(11) Veröffentlichungsnummer: **0 076 933**
**B1**

(12) **EUROPÄISCHE PATENTSCHRIFT**

(45) Veröffentlichungstag der Patentschrift:
05.02.86

(51) Int. Cl.⁴: **B 60 N 1/10**, E 05 C 3/30

(21) Anmeldenummer: **82108546.1**

(22) Anmeldetag: **16.09.82**

(54) Verriegelung für verschwenkbare Hintersitz-Rückenlehnen von Kraftfahrzeugen.

(30) Priorität: **08.10.81 DE 3140002**

(43) Veröffentlichungstag der Anmeldung:
**20.04.83 Patentblatt 83/16**

(45) Bekanntmachung des Hinweises auf die Patenterteilung:
**05.02.86 Patentblatt 86/6**

(84) Benannte Vertragsstaaten:
**DE FR GB IT SE**

(56) Entgegenhaltungen:
**DE - A - 2 401 741**
**DE - A - 2 848 268**
**DE - U - 7 728 225**
**GB - A - 1 526 861**
**US - A - 3 262 725**

(73) Patentinhaber: **Adam Opel Aktiengesellschaft,
Bahnhofsplatz 1 Postfach 1560, D-6090 Rüsselsheim
(DE)**

(72) Erfinder: **Hassmann, Franz,
Freiherr-vom-Stein-Strasse 11, D-6101 Gross-Bieberau
(DE)**

(74) Vertreter: **Baumgarten, Jochem, Dipl.-Ing. et al, C/O
Adam Opel Aktiengesellschaft
Bahnhofsplatz 1 Postfach 1560, D-6090 Rüsselsheim
(DE)**

**0 076 933**

## Beschreibung

Die Erfindung bezieht sich auf eine Verriegelung für verschwenkbare Hintersitz-Rückenlehnen von Kraftfahrzeugen, mit beidseitig der Rückenlehne an der Karosserie-Innenwandung angeordneten Verriegelungsbügeln und mit zugeordneten, beidseitig an der Rückenlehne befestigten Schlössern, welche manuell betätigbare Sperrelemente aufweisen, die mit den Verriegelungsbügeln zusammenwirken, wobei die Sperrelemente jeweils durch ein Ende eines an einem Schloßgehäuse gegen Federwiderstand verschwenkbar gelagerten Hebels gebildet werden.

Es ist allgemein bekannt, die Rückenlehnen von Vordersitzen in Kraftfahrzeugen verschwenkbar bzw. verstellbar auszubilden. Nachdem die Rückenlehnen der Hintersitze zunächst lange Zeit starr angeordnet waren, geht man jetzt zunehmend dazu über, auch die Rückenlehnen der Hintersitze verschwenkbar auszubilden. So ist es zum Beispiel bei bestimmten Personenkraftwagen bzw. Kombifahrzeugen bekannt, die Rückenlehnen der Hintersitze nach vorn umzuklappen, um auf diese Weise einen vergrößerten Laderaum zu gewinnen. Durch das Deutsche Gebrauchsmuster De-V77 28 225 ist es darüber hinaus bekannt, die Rückenlehne der Hintersitze eines Kraftfahrzeuges in ihrem Neigungswinkel verstell bar auszubilden, und zwar nicht nur mit Rücksicht auf eine bestmögliche Ausnutzbarkeit des Kofferraums, sondern auch im Hinblick auf eine größtmögliche Bequemlichkeit der Fahrzeuginsassen.

Eine Verschwenkbarkeit bzw. Verstellbarkeit der Hintersitz- Rückenlehne bedingt zwangsläufig Maßnahmen für eine lösbare Verriegelung derselben in ihrer zurückgeklappten 'normalen' Betriebsstellung. Andernfalls würde schon ein starkes Abbremsen des Fahrzeuges ein trägheitskraftbedingtes Nach-vornSchwenken der Rückenlehne bewirken. Umso gravierender würde sich bei Aufprallunfällen der Nachteil einer unverriegelten Hintersitz-Rückenlehne für die auf dem Hintersitz befindlichen Personen auswirken.

Verriegelungen für Hintersitze sowohl mit ungeteilter Rücken- lehne wie auch mit geteilter Rückenlehne sind in den verschiedensten Ausführungen bereits bekannt geworden. Zum diesbezüglichen Stand der Technik werden beispielsweise genannt die DE-A1- 28 48 268, die GB-A- 1 526 861, die DE-A1- 24 01 741 und das DE-U- 77 28 225.

Aufgabe der vorliegenden Erfindung ist es, eine Verriegelung der eingangs bezeichneten Art (DC-U-77 28 225 mit einfachen Mitteln so auszugestalten, daß auch bei starken Belastungen der Rückenlehne, wie sie insbesondere bei einem Frontalaufprall des Fahrzeugs auftreten können, ein selbsttätiges Lösen der Verriegelung nicht erfolgen kann. Gemäß der Erf indung wird diese Aufgabe dadurch gelöst, daß das Sperrelement als Doppelhaken ausgebildet ist, wobei ein erster Haken unmittelbar mit dem Verriegelungsbügel zusammenwirkt und ein zweiter Haken eine Wand des Schloßgehäuses hintergreift, derart, daß er bei starker Zugbeanspruchung des Hebels in Fahrtrichtung zusammen mit der Schloßgehäusewand einen Anschlag bildet.

Die erfindungsgemäßen Maßnahmen bewirken eine wesentliche Erhöhung der Haltefestigkeit des Schlosses, und zwar dadurch, daß die Haltefestigkeit des Schlosses nicht mehr durch die Biegefestigkeit des Sperrelements bzw. die Belastbarkeit von dessen Lagerstelle allein, sondern zusätzlich durch die Anschlagwirkung des Doppelhebels zusammen mit der Gehäusewand bestimmt wird.

Ein weiterer Vorteil der Erfindung ist in der geringen Bau- höhe des erfindungsgemäßen Schlosses zu sehen. In diesem Sinne wirkt sich eine Ausgestaltung der Erfindung besonders vorteilhaft aus, die sich dadurch auszeichnet, daß das als Doppelhaken ausgebildete Hebelende des Sperrelements mit dem zweiten Haken eine Ausnehmung in einem abgekröpften Teil des Schloßgehäuses durchgreift.

Ein weiterer wesentlicher Vorteil der Erfindung besteht in der ein;achen Herstellbarkeit des erfindungsgemäßen Schlosses. Hierzu wird in Weiterbildung der Erfindung vorgeschlagen, daß der als Sperrelement dienende Hebel als Stanzteil ausgeführt und - ausgehend von seinem Lagerpunkt am Schloßgehäuse - zunächst in eine Horizontalebene und anschließend an seinem den Doppelhaken bildenden Ende in eine Vertikalebene, jeweils rechtwinklig, abgekantet ist. Zweckmäßigerweise ist auch das Schloßgehäuse als Stanzteil ausgebildet und dient - jeweils durch mehrfache rechtwinklige Abkantung verschiedener zungenförmiger Teile desselben - einerseits zur Lagerung des das Sperrelement bildenden Hebels, andererseits als Gegenanschlag für den zweiten Haken des Hebels und ferner - zusammen mit dem ersten Haken - zur Halterung des Verriegelungsbügels in seiner Verriegelungsstellung.

In der Zeichnung ist ein Ausführungsbeispiel der Erfindung dar- gestellt, und zwar zeigt:

Fig. 1 eine Teilansicht der linken Seite des Rahmens einer Hintersitz-Rückenlehne für Fahrzeuge, von vorn, d. h. entgegen der Fahrtrichtung gesehen,

Fig. 2 eine perspektivische Rückansicht des in Fig. 1 dar- gestellten Rückenlehnenbereichs, einschließlich der unmittelbar benachbarten Karosserieteile,

Fig. 3 ein zur Verriegelung der Rückenlehne nach Fig. 1 und 2 dienendes Schloß, in Ansicht entsprechend Fig. 1,

Fig. 4 den Gegenstand von Fig. 3 in Drauf sicht,

Fig. 5 das Schloß nach Fig. 3 und 4, in Pfeilrichtung A gesehen,

Fig. 6 eine Separatdarstellung eines hebelförmigen Sperr- elements aus dem Schloß nach Fig. 3 - 5, in Ansicht entsprechend Fig. 3,

Fig. 7 das Sperrelement nach Fig. 6 in Drauf sicht, und

Fig. 8 einen Schnitt längs der Linie VIII-VIII in Fig. 6.

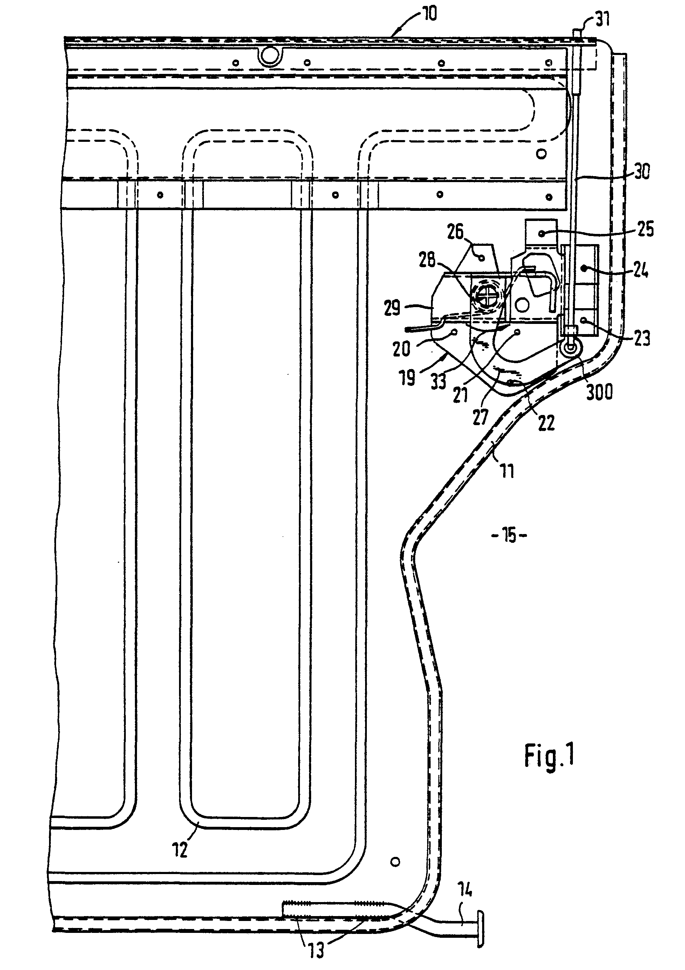

Nach Fig. 1 be zeichnet 10 den von einem Stahlrohr 11 umgebenen Rahmen einer Hintersitz-Rückenlehne für personenkraftwagen. Die üblichen mäanderförmig gewundenen Federelemente der Rückenlehne sind mit 12 beziffert. Ein an der linken unteren Kante des Rückenlehnenrahmens mit dem Stahlrohr 11 bei 13 verschweißter

2

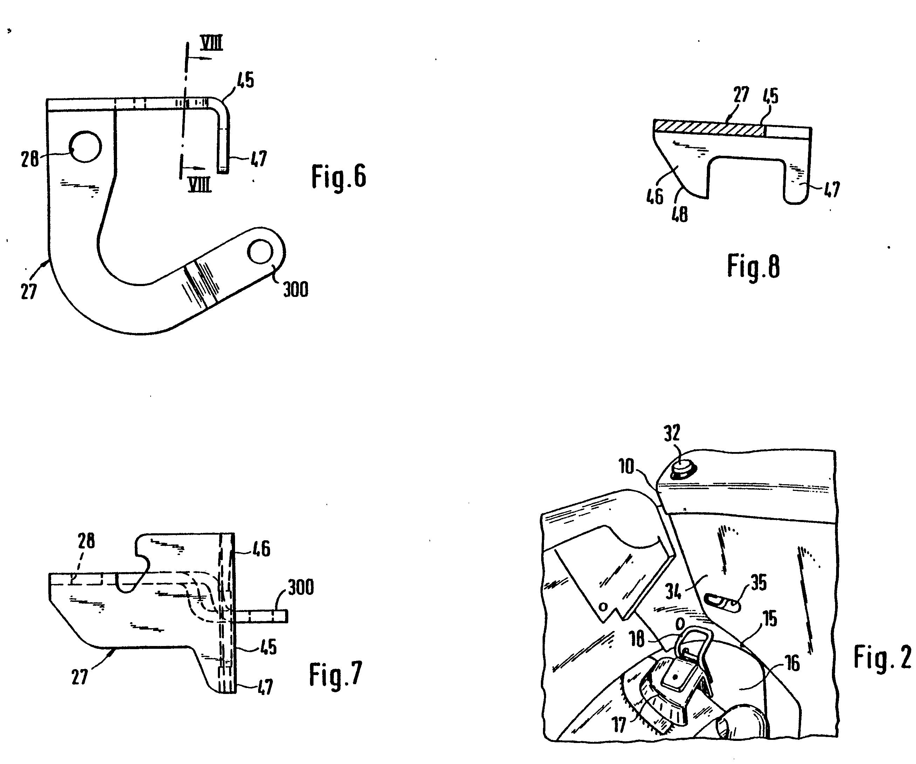

Lagerzapfen 14 dient der gelenkigen Verbindung der Rückenlehne 1 1 mit dem (nicht gezeigten) Sitzteil des Fahrzeugsitzes. Das die Tragfunktion des Rückenlehnenrahmens im wesentlichen übernehmende Stahlrohr 1 1 ist seitlich nach innen gebogen ausgebildet, so daß sich dort eine mit 15 bezeichnete Aussparung ergibt, die - wie Fig. 2 erkennen läßt - aus Gründen des linken hinteren Radkastens 16 vorgesehen ist.

Eine entsprechende achssymmetrisch gleichartige Ausgestaltung des Rückenlehnenrahmens 10 ist auch auf der rechten, in Fig. 1 und 2 nicht gezeigten Seite des Rückenlehnenrahmens 1 0 vorgesehen.

Wie Fig. 2 zeigt, ist auf dem Radkasten 16 ein als Blechprägeteil ausgebildeter Lagerbock 17 angeschweißt, an dessen der Rückenlehne 10 zugewandter Stirnfläche ein rechtwinklig abgebogener Verriegelungsbügel 18 angeschraubt ist. Der Verriegelungsbügel 18 bildet den karosserieseitigen Teil einer Verriegelung zur lösbaren Fixierung der Rückenlehne 10 in ihrer zurückgeklappten normalen Betriebsstellung. Als rückenlehnenseitiger Teil dieser Verriegelung fungiert ein insgesamt mit 19 bezeichnetes Schloß, welches - wie Fig. 1 erkennen läßtam oberen seitlichen Ende des Rückenlehnenrahmens 10 mit diesem verschraubt ist. Die betreffenden Bohrungen zur Herstellung der Schraubverbindung zwischen dem Schloß 19 und dem Rückenlehnenrahmen 10 sind in Fig. 1 durch die Bezugszeichen 20 bis 26 angedeutet. Auf diese Weise ist eine feste Verbindung zwischen dem Schloß 19 und dem Rückenlehnenrahmen 10 gewährleistet, die auch starken Beanspruchungen, wie sie insbesondere bei einem Aufprallunfall des Fahrzeuges auftreten, standzuhalten vermag.

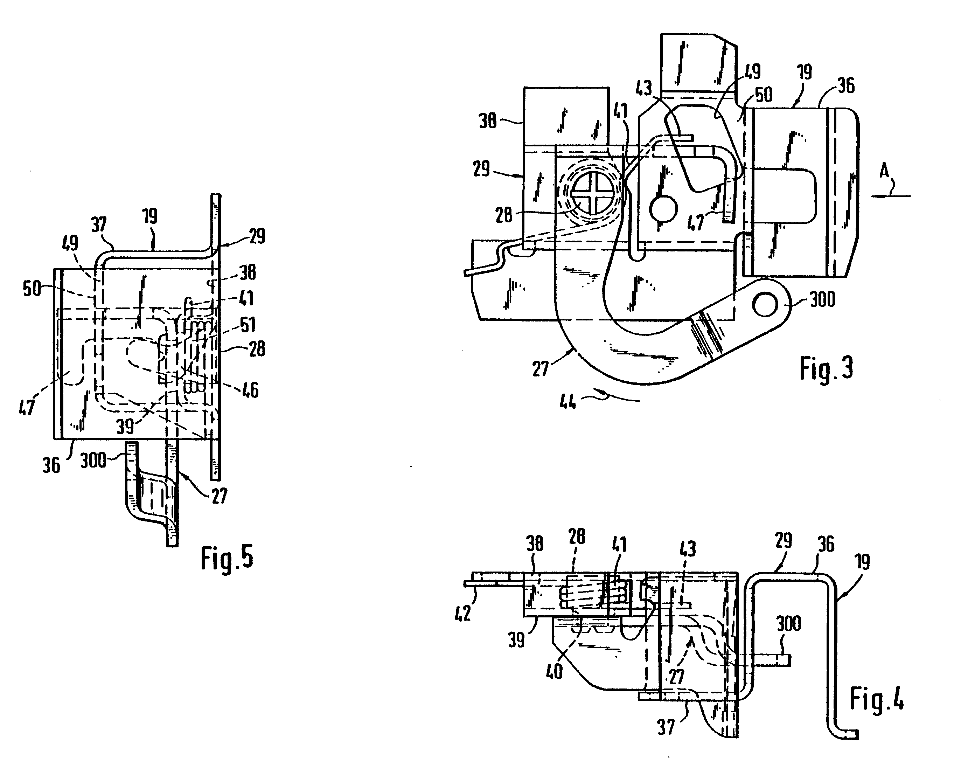

Wesentlicher Bestandteil des Verriegelungsschlosses 19 ist ein hebelförmig ausgebildetes Sperrelement 27, welches insbesondere aus der Separatdarstellung der Fig. 6 bis 8 in allen Einzelheiten deutlich hervorgeht. Wie insbesondere auch aus der Separatdarstellung des Verriegelungsschlosses 19 in Fig. 3 bis 5 erkennbar ist, ist das Sperrelement 27 bei 28 an einem mit 29 bezifferten Schloßgehäuse drehbeweglich gelagert. An dem einen, mit 300 bezeichneten Ende des Sperrelements 27 greift ein Seilzug oder Betätigungsgestänge 30 an, welches - wie Fig. 1 verdeutlicht - im Rückenlehnenrahmen 10 senkrecht nach oben verläuft und mit seinem oberen Ende 31 über die Oberkante der Rückenlehne hinausragt. Fig. 2 läßt erkennen, daß an dem oberen Ende 31 des Seilzugs oder Betätigungsgestänges 30 ein Betätigungsknopf 32 angebracht ist, der dazu dient, das Sperrelement 27 von außen manuell zu betätigen. Zieht man an dem Knopf 32, so führt das Sperrelement 27 eine Schwenkbewegung in Pfeilrichtung 33 (Fig. 1) um seinen Lagerpunkt 28 aus.

In der perspektivischen Darstellung nach Fig. 2 ist das Verriegelungsschloß 19 nicht erkennbar, da es von der mit 34 bezeichneten rückwärtigen Abschlußwand der Rückenlehne 10 verdeckt ist. In seiner Verriegelungsstellung greift der Verriegelungsbügel 18 durch einen Schlitz 35 in die Rückenlehne 10 ein und kommt dabei hinter der Abschlußwand 34 mit dem in Fig. 2 nicht erkennbaren Verriegelungsschloß 19 bzw. dessen Sperrelement 27 in Eingriff. Aus dem im Vorstehenden Gesagten ergibt sich, daß in der Darstellung nach Fig. 2 die Verriegelungsvorrichtung in ihrer entriegelten Stellung gezeigt ist, wobei die Rückenlehne 1 0 bereits um einen geringen Winkel nach vorn verschwenkt ist.

Die Ausgestaltung des Verriegelungsschlosses 19 ist im einzelnen insbesondere aus Fig. 3 bis 5 erkennbar. Danach besteht das Schloßgehäuse 29 aus einem Blech von ausreichender Dicke und Festigkeit und ist insgesamt als Stanzteil ausgebildet. Die aus Fig. 3 bis 5 ersichtliche Form des Schloßgehäuses 29 ergibt sich durch mehrfache rechtwinklige Abkantung verschiedener zungenförmiger Teile desselben, die mit 36, 37 und 38 beziffert sind. Die Lagerstelle 28 des Sperrelements 27 wird hierbei durch eine Abkröpfung 39 gebildet. Der eine Lagerbohrung 40 der Abkröpfung 39 durchsetzende Lagerzapfen 28 ist von einer Haarnadelfeder 41 umschlossen, deren eines Ende 42 sich am Schloßgehäuse 29 und deren anderes Ende 43 sich am Sperrelement 27 abstützt. Durch die Haarnadelfeder 41 ist das Sperrelement 27 in Pfeilrichtung 44 (Fig. 3) vorgespannt, so daß eine Betätigung des Sperrelements 27 in entgegengesetzter Richtung (vgl. Pfeil 33 in Fig. 1) nur gegen den Widerstand der Feder 41 erfolgen kann.

Wie insbesondere aus Fig. 5 bis 8 erkennbar ist, ist das eine, mit 45 bezeichnete Ende des Sperrelements 27 als Doppelhaken ausgebildet. Fig. 6 bis 8 machen weiterhin deutlich, daß das insgesamt als Stanzteil ausgebildete Sperrelement 27, ausgehend von seiner Lagerstelle 28, zunächst in eine Horizontalebene und anschließend an seinem den Doppelhaken bildenden Ende 45 in eine Vertikalebene, jeweils rechtwinklig, abgekantet ist. Die beiden Haken des Doppelhakens 45 sind mit 46 und 47 bezeichnet. Der eine Anlauf schräge 48 aufweisende erste Haken 46 wirkt unmittelbar mit dem Verriegelungsbügel 18 (siehe Fig. 2) zusammen, wobei er in der Verriegelungsstellung den Verriegelungsbügel 18 hintergreift.

Der mit 47 bezeichnete zweite Haken des Doppelhakens 45 durch- greift dagegen - wie insbesondere aus Fig. 3 und 5 erkennbar ist - eine Ausnehmung 49 in einer rechtwinkligen Abkröpfung 50 des Schloßgehäuses 29. In der aus Fig. 3 bis 5 ersichtlichen Verriegelungsstellung des Sperrelements 27 hintergreift hierbei gleichzeitig der zweite Haken 47 die vertikale Wand der Abkröpfung 50, in der die Ausnehmung 49 eingearbeitet ist. Hierdurch wird durch den zweiten Haken 47 einerseits und die von diesem hintergriffene Wand der Abkröpfung 50 andererseits ein Anschlag gebildet, der bei starken Zugbelastungen des Sperrelements 27 durch den Verriegel ungsbügel 18, hervorgerufen durch extrem hohe Abbremsungen des Fahrzeugs, insbesondere bei Aufprallunfällen desselben, in Tätigkeit tritt. Bei der genannten extremen Beanspruchung der Verriegelung muß also die Zubelastung des Sperrelements 27 nicht mehr allein von der Lagerstelle 28 aufgenommen werden, sondern ein Teil der hohen Kräfte werden auch über den zweiten Haken 47 des Doppelhakens 45 unmittelbar auf das Schloßgehäuse 29 übertragen. Hierdurch ergibt sich vorteilhaft eine wesentlich erhöhte Haltefestigkeit des gesamten Verriegelungsschlosses 19.

Die Herstellung der Verriegelungsstellung zwischen Verriege- lungsschloß 19 und Verriegelungsbügel 18 erfolgt selbsttätig durch entsprechendes Zurückschwenken der gesamten HintersitzRückenlehne. Bedingt durch die Anlaufschräge 48 am ersten Haken 46 des Doppelhakens 45 wird durch den in eine sich in Eingriff srichtung verjüngende schlitzförmige Aussparung 51 des Schloßgehäuses 29 eingreifenden Verriegelungsbügel 18 das Sperrelement 27 in pfeilrichtung 33 (Fig. 1), d. h. entgegen der Vorspannung der Feder 41, verschwenkt, bis schließlich der erste Haken 46 hinter dem Verriegelungsbügel 18 einrastet.

Die Lösung der Verriegelung erfolgt - wie bereits oben angedeutet - durch Ziehen des Betätigungsknopfes 32 (Fig. 2) nach oben. Um die Betätigung des Sperrelements 27 durch den Betätigungsknopf 32 bzw. den mit diesem verbundenen Seilzug 30 (bzw. Betätigungsgestänge) zu erleichtern, ist das freie Ende 300 des Sperrelements 27 im spitzen Winkel auf den doppelhakenförmig ausgebildeten Teil 45 des Sperrelements 27 abgebogen (vgl. hierzu insbesondere Fig. 1, 3 und 6).

## Patentansprüche

1. Verriegelung für verschwenkbare Hintersitz-Rückenlehnen von Kraftfahrzeugen, mit beidseitig der Rückenlehne an der Karosserie-Innenwandung angeordneten Verriegelungsbügeln (18) und mit zugeordneten, beidseitig an der Rückenlehne befestigten Schlössern (19), welche manuell betätigbare Sperrelemente (27) aufweisen, die mit den Verriegelungsbügeln zusammenwirken, wobei die Sperrelemente jeweils durch ein Ende eines an einem Schloßgehäuse (29) gegen Federwiderstand verschwenkbar gelagerten Hebels gebildet werden, dadurch gekennzeichnet, daß das Sperrelement (27) als Doppelhaken (45) ausgebildet ist, wobei ein erster Haken (46) unmittelbar mit dem Verriegelungsbügel ( 18) zusammenwirkt und ein zweiter Haken (47) eine Wand (50) des Schloßgehäuses (29) hintergreift, derart, daß er bei starker Zugbeanspruchung des Sperrelements (27) in Fahrtrichtung zusammen mit der Schloßgehäusewand ( 50) einen Anschlag bildet.

2. Verriegelung nach Anspruch 1, dadurch gekennzeichnet, daß das als Doppelhaken ausgeb ildete Hebelende (45) des Sperrelements (27) mit dem zweiten Haken (47) eine Ausnehmung (49). in einem abgekröpften Teil (50) des Schloßgehäuses (29) durchgreif t.

3. Verriegelung nach Anspruch 1 oder 2, dadurch gekennzeichnet, daß der als Sperrelement dienende Hebel (27) als Stanzteil ausgeführt und - ausgehend von seinem Lagerpunkt (28) am Schloßgehäuse (29) - zunächst in eine Horizontalebene und anschließend an seinem den Doppelhaken bildenden Ende (45) in eine Vertikalebene, jeweils rechtwinklig, abgekantet ist.

4. Verriegelung nach Anspruch 1, 2 oder 3, dadurch gekennzeichnet, daß das Schloßgehäuse (29) als Stanzteil ausgebildet ist und - jeweils durch mehrfache rechtwinklige Abkantung verschiedener zungenförmiger Teile (36, 37, 38) desselben - einerseits zur Lagerung des Sperrelements (27), andererseits als Gegenanschlag für den zweiten Haken (47) des Sperrelements (27) und fernerzusammen mit dem ersten Haken (46) - zur Halterung des Verriegelungsbügels ( 18) in seiner Verriegelungsstellung dient.

5. Verriegelung nach einem der vorstehenden Ansprüche, dadurch gekennzeichnet, daß das an seinem einen Ende (45) doppelhakenförmig ausgebildete Sperrelement (27) an seinem anderen Ende (300) spitzwinklig in Richtung auf das doppelhakenförmige Ende (45) abgebogen ist und den Angriff spunkt für einen Seilzug (30) oder ein Gestänge zur manuellen Betätigung des Sperrelements (27) bildet.

## Claims

1. Locking device for pivotable rear seat back rests of motor vehicles, with locking straps (18) disposed on the inside panel of the body on both sides of the back rest, and with associated locks (19) which are attached to the back rest on both sides and which comprise manually operated latching elements (27) which coact with the locking straps, the latching elements being formed in each case by one end of a lever which is mounted on a lock housing (29) and pivotable against spring resistance, characterised by the fact that the latching element (27) is constructed as a double hook (45), with a first hook (46) directly coacting with the locking strap (18) and a second hook (47) engaging behind a wall (50) of the lock housing (29) so as to form, together with the lock housing wall (50), a stop in case of high tensile stress on the latching element (27) in the direction of travel.

2. Locking device according to claim 1, characterised by the fact that the double hook-like lever end (45) of the latching element (27), with the second hook (47), engages through a recess (49) in a perpendicularly bent portion (50) of the lock housing (29).

3. Locking device according to claim 1 or 2, characterised by the fact that the lever (27) acting as the latching element is constructed as a stamped component and, starting from its mounting point (28) on the lock housing (29), is bent first in a horizontal plane and then, at its end (45) forming the double hook, in a vertical plane, in each case et right angles.

4. Locking device according to claim 1,2 or 3, characterised by the fact that the lock housing (29) is constructed as a stamped component and - in each case by repeated bending at right angles of different lug-like portions (36, 37, 38) thereof - serves on the one hand for mounting the latching element (27), on the other hand as a counterstop for the second hook (47) of the latching element (27), and further - together with the first hook (46) - for supporting the locking strap (18) in its locked position.

5. Locking device according to one of the preceding claims, characterised by the fact that the latching element (27), which is constructed as a double hook at one end (45), is bent at an acute angle at its other end (300) in a direction towards the double hook-shaped end (45) and forms the point of engagement for a control cable (30) or a link rod for manually operating the latching element (27).

**Revendications**

1. Dispositif de verrouillage pour dossiers basculables de sièges arriere de véhicules automobiles, avec des etriers de verrouillage (18) disposés des deux côtés du dossier sur la paroi intérieure de la carrosserie, et des serrures (19) correspondantes fixées des deux côtes sur le dossier, lesquelles présentent des éléments de blocage (27) actionnables manuellement qui coopèrent avec les étriers de verrouillage et qui sont chacun formes par une extremite d'un levier monte sur un boîtier (29) de serrure avec possibilite de pivotement à l'encontre de la resistance d'un ressort, caractérisé en ce que l'élé ment de blocage (27) est realisé sous la forme d'un crochet double (45), un premier crochet (46) cooopérant directement avec l'étrier de verrouillage (18), et un deuxième crochet (47) s'accrochant par derriere dans une paroi (50) du boîtier (29) de serrure, de sorte telle qu'en cas de forte traction sur l'élément de blocage (27) dans le sens de marche, il forme une butée conjointement avec la paroi (50) du boîtier de serrure.

2. Dispositif selon la revendication 1, caractérisé en ce que l'extrémité (45) de levier conçue comme double crochet pénètre par le deuxième crochet (47) dans un évidement (49) pratiqué dans une partie (50) de portée du boîtier (29) de serrure.

3. Dispositif selon la revendication 1 ou 2, caractérisé en ce que le levier (27) servant d'élément de blocage est une pièce fabriquée à la presse qui, à partir de son point (28) de montage sur le boîtier (29) de serrure, est deux fois pliée à angle droit, d'abord dans un plan horizontal, puis, à son extrémité (45) formant le double crochet, dans un plan vertical.

4. Dispositif selon l'une quelconque des revendications précéden- tes, caractérisé en ce que le boîtier (29) de serrure est une pièce fabriquée à la presse qui, par plusieurs pliages à angle droit de différentes parties (36, 37, 38) en forme de languettes, sert d'une part au montage de l'élément de blocage (27), d'autre part de contrebutée pour le deuxième crochet (47) de l'élement de blocage (27), et enfin, conjointement avec le premier crochet (46), au maintien de l'étrier de verrouillage (18) dans sa position de verrouillage.

5. Dispositif selon l'une quelconque des revendications précéden- tes, caractérisé en que l'élément de blocage (27) formé en double crochet à l'une (45) de ses extrémités, est courbé à son autre extrédouble crochet, et sert ici de direction de point d'attaque pourune commande par câble (30) ou une tringlerie servant à l'actionnement manuel de l'élément de blocage (27)

Fig.1

-15-

Fig.6

Fig.8

Fig.7

Fig.2

0 076 933

2/3

0 076 933

Fig.3

Fig.4

Fig.5